# EUROPEAN PATENT SPECIFICATION

(11) **EP 1 364 572 B1**
(45) Date of publication and mention of the grant of the patent: **27.07.2005**
(21) Application number: 02425304.9
(22) Date of filing: 15.05.2002
(51) Int. Cl.: A01D 34/86

(54) **Forest bush cutter vehicle**
Buschmäherfahrzeug
Véhicule de débroussailleuse

(43) Date of publication of application: 26.11.2003
(73) Proprietor: Laserjet S.r.l., 36026 Poiana Maggiore (Vicenza) (IT)
(72) Inventor: Fraron, Lino, 36040 Orgiano (Vicenza) (IT); Fraron, Ivo, 36040 Orgiano (Vicenza) (IT)
(74) Representative: Ponchiroli, Simone

(56) References cited:
- EP-A- 1 159 866
- DE-A- 19 921 761
- GB-A- 2 081 563
- GB-A- 2 140 264
- GB-A- 2 180 133
- US-A- 3 498 036
- US-A- 3 599 403
- US-A- 3 665 685
- US-A- 4 996 830
- US-A- 5 392 593

## Description

The present invention relates to a forest bush cutter vehicle comprising the characteristics expressed in the preamble to Claim 1.

In particular, the bush cutter vehicle of the present invention is destined to be advantageously used also for the maintenance of roadsides, especially those of motorways, whereto hereinafter reference shall explicitly be made for the description of the operative capabilities both of traditional vehicles, and of vehicles according to the present invention.

In most cases motorways are flanked, on both sides, by a roadside that has an inner portion and an outer portion separated by a guard-rail. Oftentimes, the outer portion also has a ditch having two banks with opposite slopes.

Since normally the roadsides are covered with vegetation, it is necessary periodically to mow said vegetation.

According to currently widespread procedures, the roadside is mowed with a plurality of tractors single file, advancing along the edge of the road.

Each tractor is equipped, in its rear or lateral part, with a cutting device able to be operated from the cab and destined to operate in a specific area of the roadside.

Advantageously, four tractors are used simultaneously today: a first tractor that operates on the roadside portion adjacent to the road, a second tractor that operates in proximity to the side of the guard-rail oriented towards the road, a third tractor that operates in proximity to the side of the guard-rail oriented outwards, and a fourth tractor that operates on the outermost portion of the roadside.

When the ditch is also present, a fifth tractor would additionally be necessary, operating on the farther bank of the ditch, on the closer bank acting the fourth aforesaid tractor.

Although in this way it is possible to mow the roadside in sufficiently accurate fashion, some drawbacks are nonetheless encountered.

A first drawback is represented by the fact that to effect the cleaning operation it is necessary to have available a plurality of tractors, each of which must be driven by an operator.

Consequently, the operating costs are very high, due both to labour and to the maintenance of a high number of tractors.

A second drawback is instead given by the fact that the equipment that is applied to each tractor entails a modification of its attitude, with a considerable increase of the load on the axles, so that it is often necessary to proceed with a new certification of the vehicle.

A different problem is represented by the non ergonomic working position assumed by the tractor drivers, who are forced to remain constantly twisted laterally with their body to check the operation of the cutting organ mounted on their tractor.

In the long run, this can lead to the appearance of work-related illnesses linked to the incorrect posture.

A type of vehicle mounted brush cutter is disclosed in US 4,996,830.

This brush cutter system comprises a rubber tired undercarriage, a cab and engine assembly mounted on a turntable of the undercarriage, a boom combination, attached to the frame of the cab and the engine assembly, for pivotal movement in a vertical plane, and a brush cutter assembly attached to the outer end of the boom combination for pivotal movement in a vertical plane. The undercarriage is supported by two front legs, each one provided with an idler wheel and a support pad.

In a normal operative brush cutting mode, the front legs are pivoted downwards far enough to engage the support pads and lift the idler wheels clear of the ground.

The front and rear legs can be spread outward to whatever extent was required for stability.

When the vehicle is to be driven and steered under its own power, using the rear drive wheels, the front legs are positioned inward to place the idler wheels parallel to one another and the front legs are raised to lift the support pads clear and to engage the idler wheels with the ground.

In this situation the technical task constituting the basis for the present invention is to provide a forest bush cutter vehicle that overcomes the aforementioned drawbacks.

In particular, the technical task of the present invention is to provide a forest bush cutter vehicle controllable by a single operator, and able to execute by itself all the work processes of the tractors in use today, whilst allowing the operator not to assume incorrect postures.

The specified technical task and the indicated aims are substantially achieved by a forest bush cutter vehicle, as described in the accompanying claims.

Further features and advantages of the invention shall become more readily apparent from the detailed description of three preferred, but not exclusive, embodiments of a forest bush cutter vehicle, illustrated in the accompanying drawings, in which:
- Figure 1 shows a lateral elevation view of a vehicle according to an intermediate embodiment of the present invention, in road travelling condition;
- Figure 2 shows a front elevation view of the vehicle of Figure 1;
- Figure 3 shows a plan view of the vehicle of Figure 1;
- Figure 4 shows a rear axonometric view of the vehicle of Figure 1;
- Figure 5 shows a front axonometric view of the vehicle of Figure 1 with the wheels in round displacement position;
- Figure 6 shows a front elevation view of the vehicle of Figure 1 in working condition;
- Figure 7 shows a front axonometric view of the vehicle of Figure 6;
- Figure 8 shows a plan view of the vehicle of Figure 6;
- Figure 9 shows a front elevation view of the vehicle of Figure 1 in a partial working condition;
- Figure 10 shows a front elevation view of the vehicle of Figure 1 in an additional partial operating condition;
- Figure 11 shows a lateral elevation view of a vehicle built according to a more complete embodiment of the present invention, in road travelling condition;
- Figure 12 shows a front elevation view of the vehicle of Figure 11;
- Figure 13 shows a plan view of the vehicle of Figure 11;
- Figure 14 shows a rear axonometric view of the vehicle of Figure 11;
- Figure 15 shows a plan view of the vehicle of Figure 11 in working condition, with part of the main articulated arm removed;
- Figure 16 shows a front axonometric view of the vehicle of Figure 11;
- Figure 17 shows a front axonometric view of the vehicle of Figure 11 with the wheels in round displacement position;
- Figure 18 shows a partial front axonometric view of the vehicle of Figure 11 in a partial operating conditions; and
- Figure 19 shows a plan view of a minimal embodiment of the vehicle of the present invention.

With reference to the aforesaid figures, the reference number 1 globally indicates a forest bush cutter vehicle, according to the present invention.

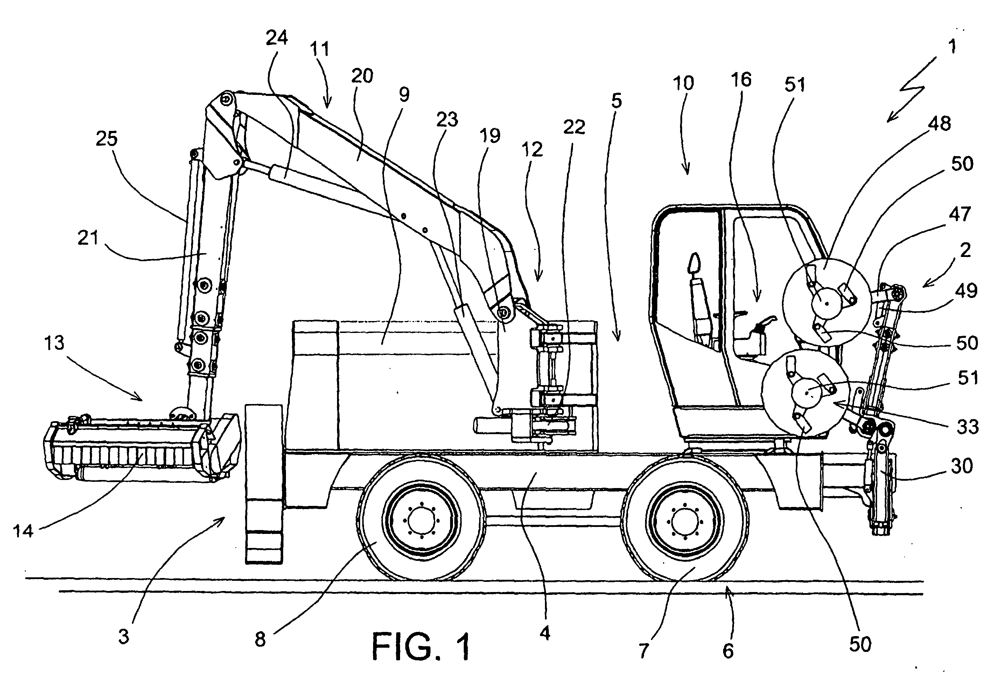

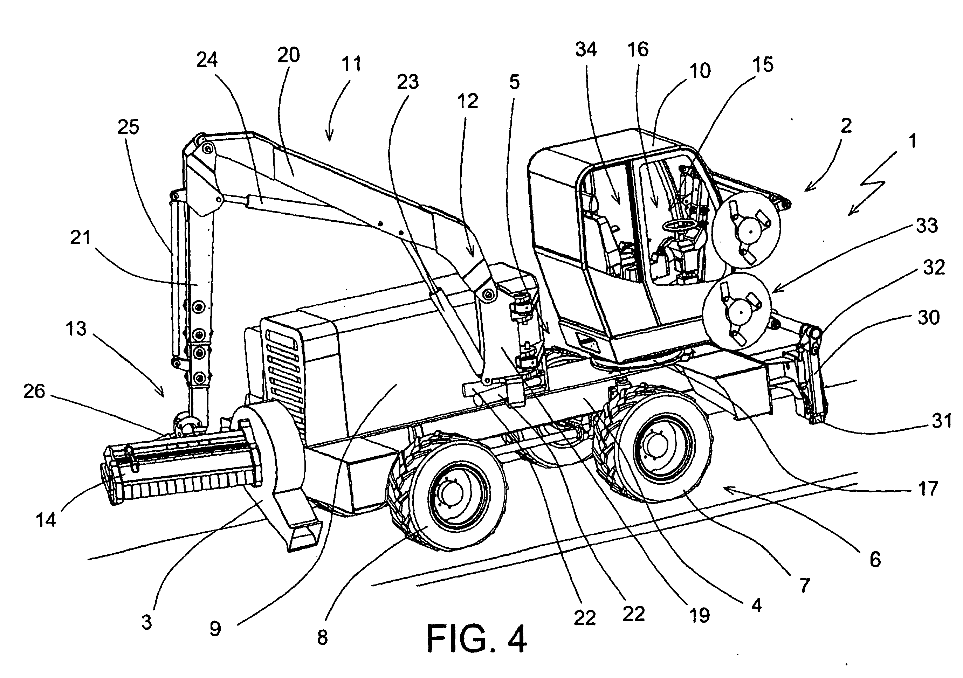

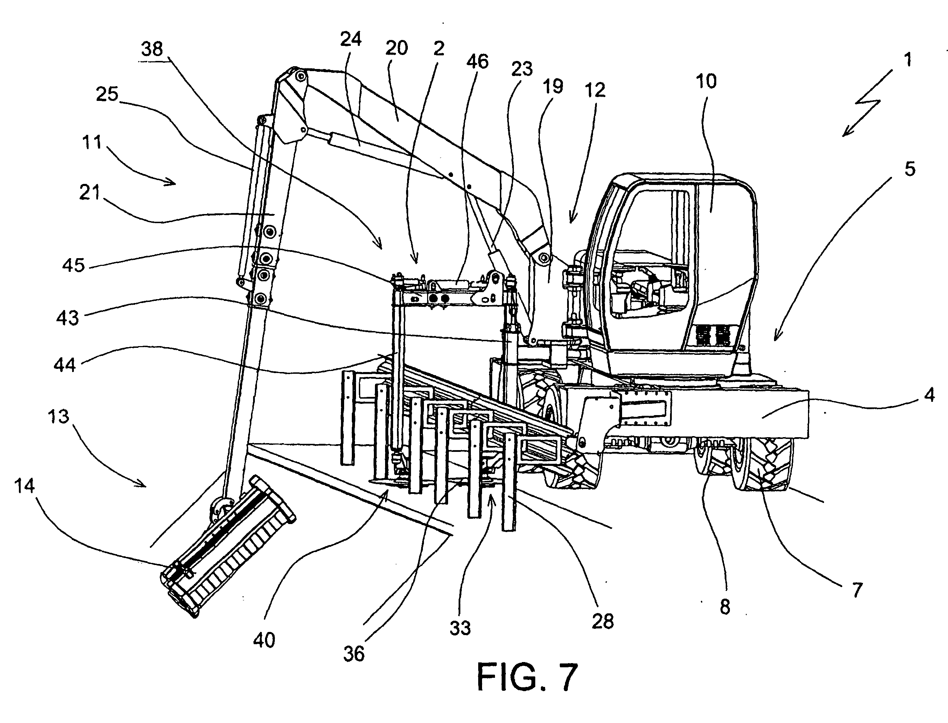

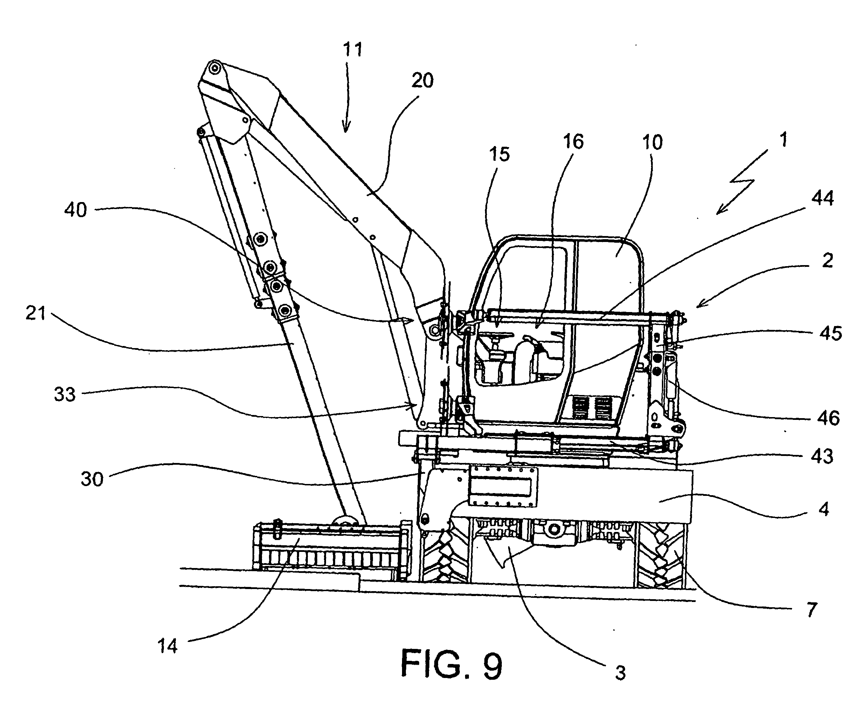

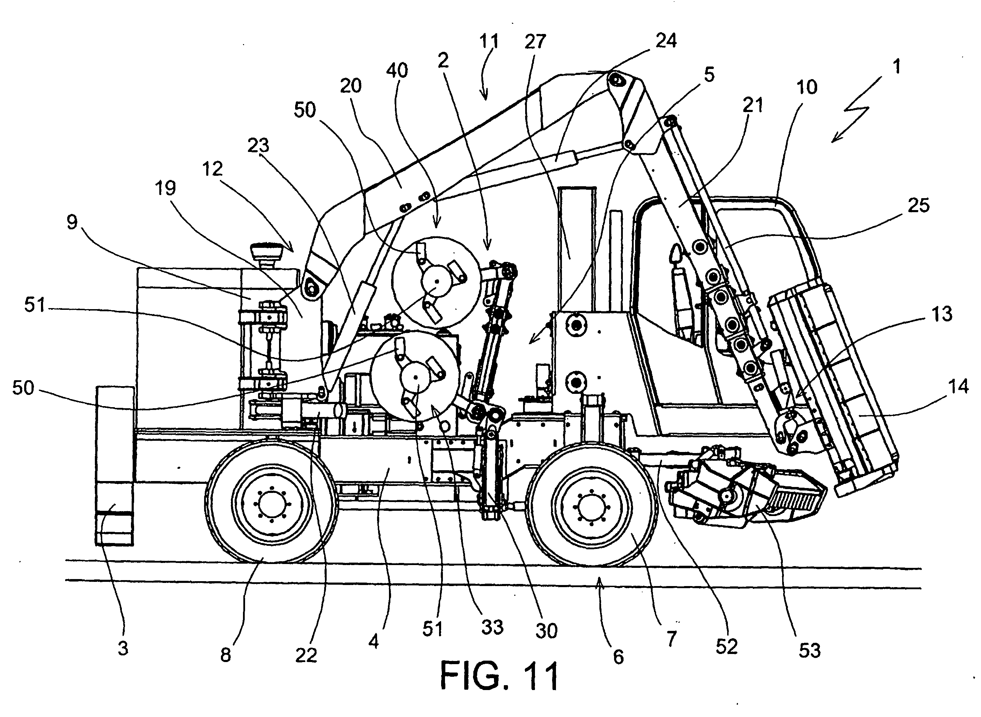

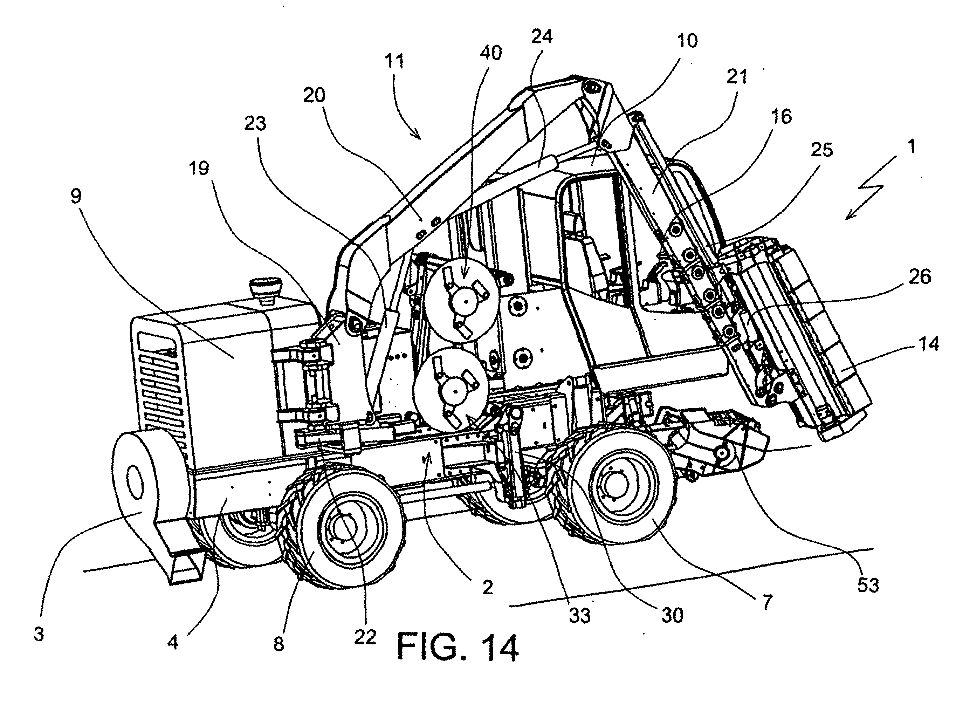

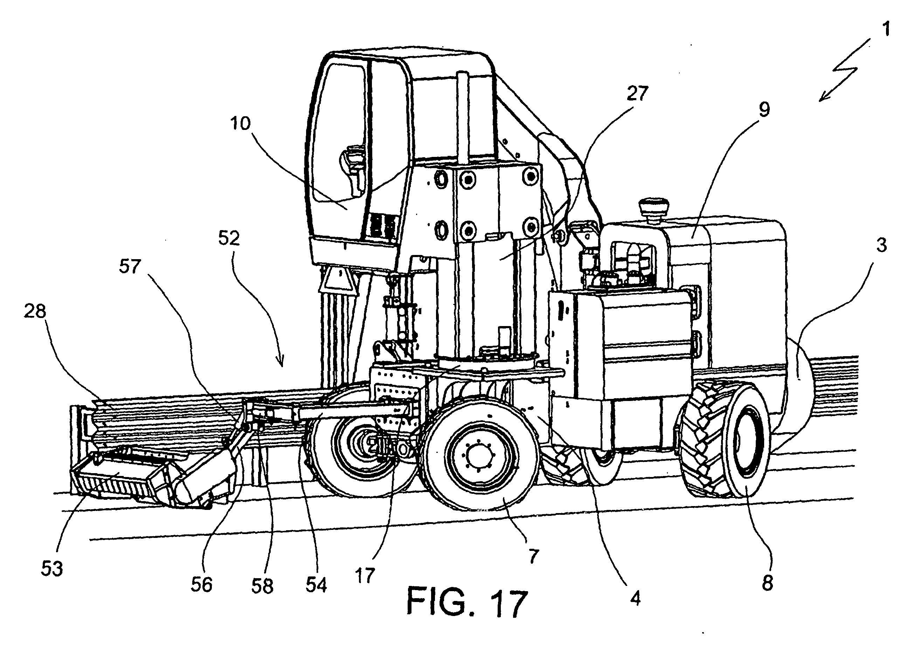

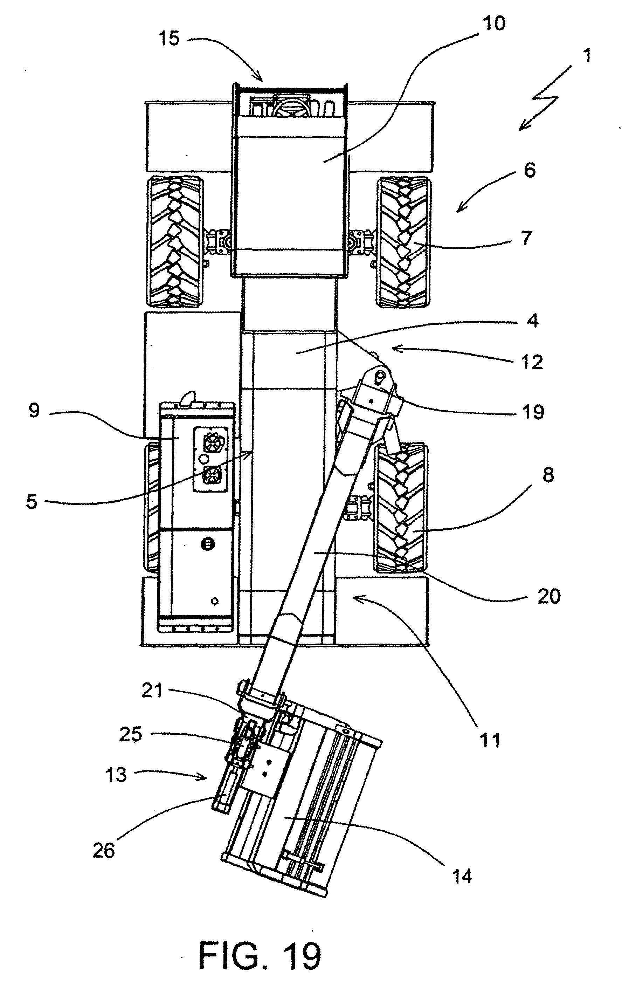

The accompanying figures show three embodiments of the present invention, a basic model (Figure 19), an intermediate model (Figures 1 through 10) in which a front grass cutter organ 2 and a rear blower 3 have been added to the basic model, and a more complete model (Figures 11 through 18).

In all the embodiments of the present invention, the skeleton of the vehicle 1 is constituted by a frame 4, which superiorly defines a support area 5, and which extends according to a first direction of longitudinal development and according to a second direction of transverse development.

On the frame 4 are mounted advancement means 6 that allow the vehicle 1 to move on the ground. In particular, in the embodiments illustrated in the accompanying figures, four wheels are provided, two front wheels 7 and two rear wheels 8, but other embodiments may be provided with tracks, mixed systems or other systems.

On the frame 4 are also mounted an engine 9 operatively connected at least to the advancement means 6, a control cab 10 for housing an operator, and at least a main articulated arm 11 able to be activated laterally to the vehicle and having a first end 12 pivotally engaged to the support area 5 of the vehicle 1, and a second end 13 provided with a primary motorised bush cutter tool 14.

The operator housed in the cab 10 can access both driving means 15 operatively active on the advancement means 6 and on the engine 9 to allow the vehicle 1 to be driven, and means 16 for commanding the main arm 11 and the primary bush cutter tool 14.

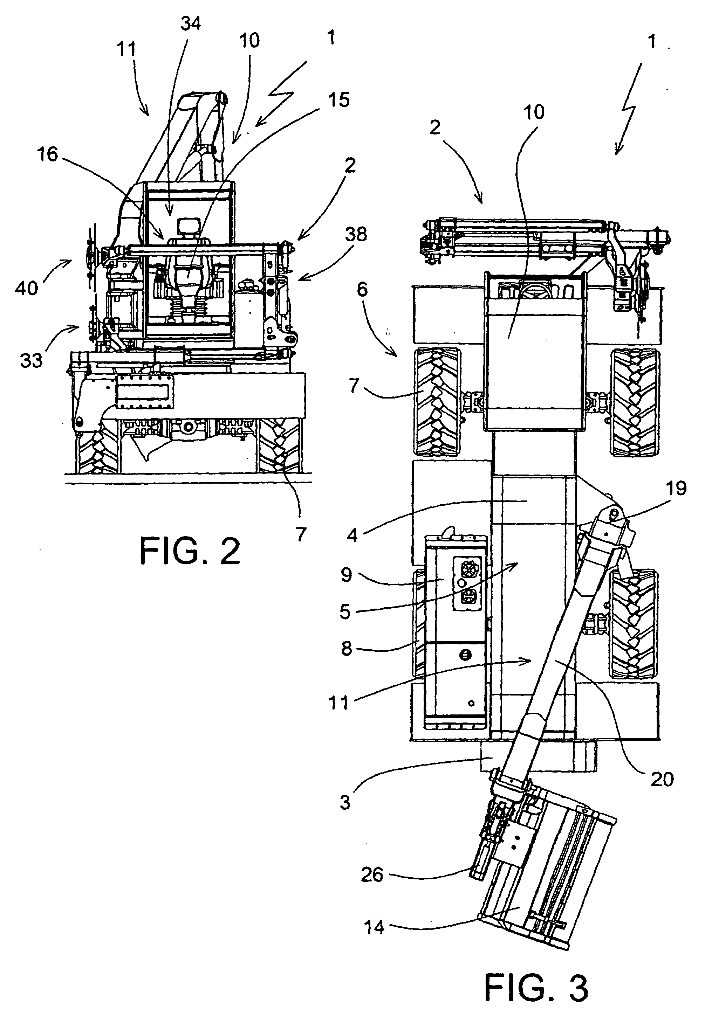

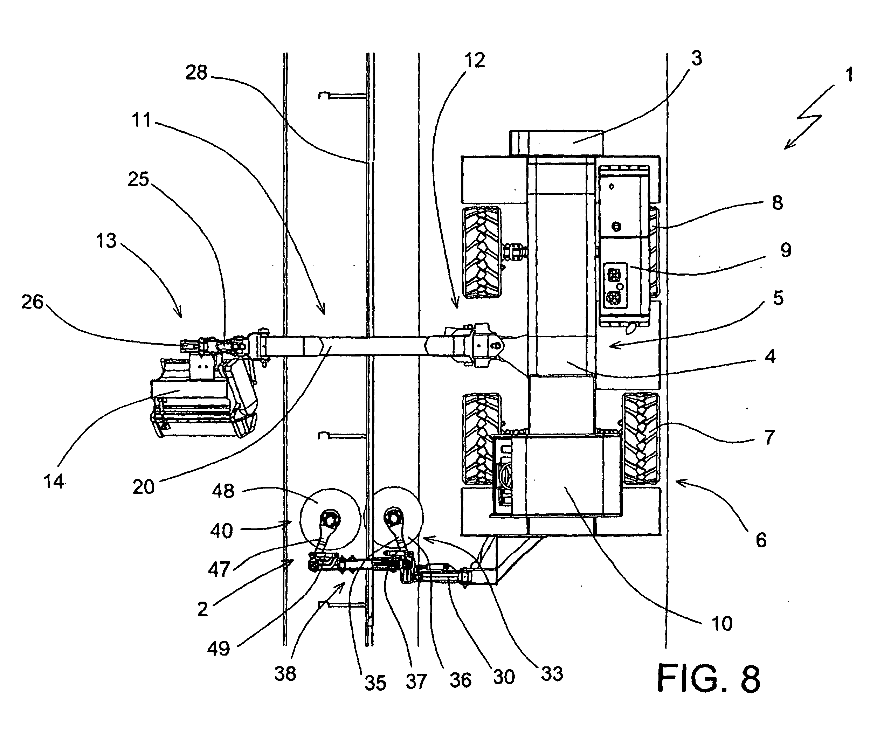

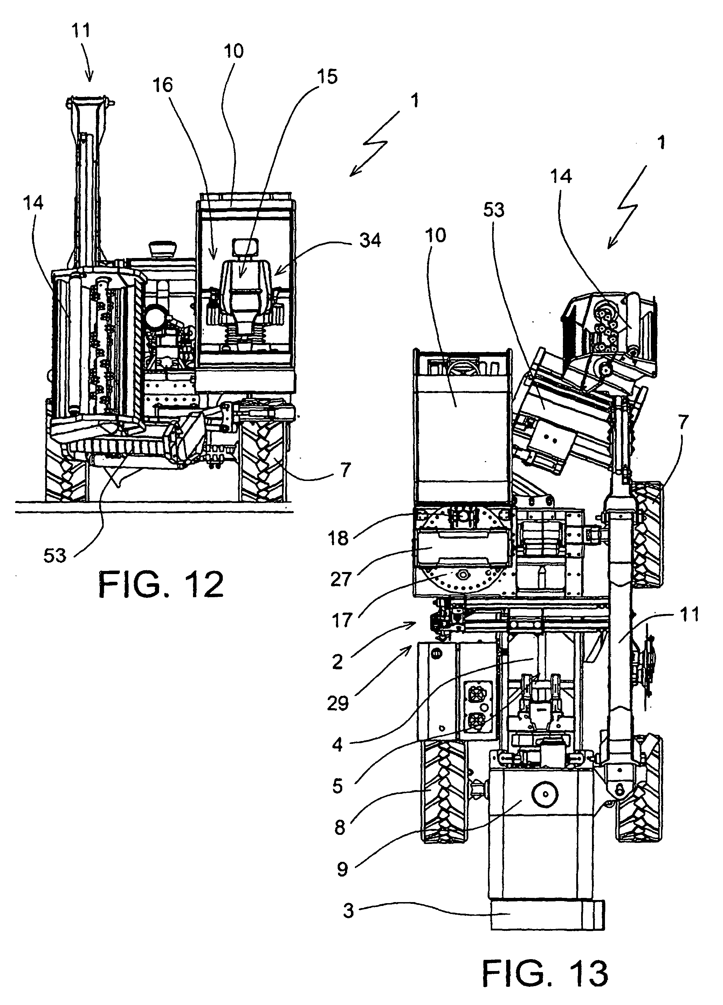

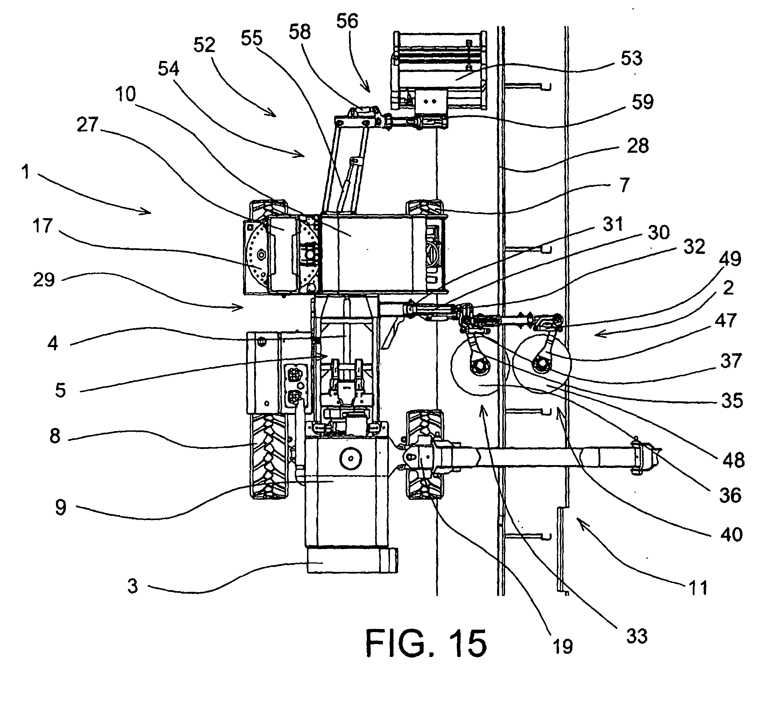

The control cab 10 is connected in rotary fashion to the frame 4 by means of a rotating fifth wheel 17 actuated by an appropriate secondary engine 18 (Figure 13), and it can rotate about a substantially vertical axis of rotation at least from a first frontal position in which it is oriented according to the direction of longitudinal development of the vehicle 1 (Figures 3, 13 and 19), to at least a second lateral position in which it is oriented according to the direction of transverse development (Figures 8 and 15).

Moreover, at least the driving means 15 are able to operate, allowing the vehicle 1 to be driven, both when said cab 10 is in the first position and when it is in the second position.

In any case, all manoeuvring possibilities of the vehicle 1 can be enabled or disabled both in one and in the other position of the cab 10, as well as in intermediate positions.

In regard to the main articulated arm 11, in the illustrated embodiments it is constituted by a support body 19 fastened in rotary fashion to the frame 4 according to a vertical axis of rotation, whereto is fastened in rotary fashion, according to a horizontal axis of rotation, a first arm element 20 in turn supporting a second arm element 21 pivotally engaged thereto according to a horizontal axis of rotation.

The actuation of the main arm 11 is effected by two opposite rotation jacks 22 that act on the support body 19, by a first lifting cylinder 23 active on the first arm element 20, and by a second lifting cylinder 24 active on the second arm element 21.

The second arm element 21 is telescopic, and its extension is effected by an upper extending cylinder 25.

The primary bush cutter tool 14 is also connected in articulated fashion to the second end 13 of the articulated arm 11, an appropriate end jack 26 providing for its actuation according to the operator's commands given through the command means 16 located in the cab 10.

The characteristics described heretofore are the fundamental characteristics of the present invention, and are present in all currently envisioned embodiments.

In the most complete embodiment of the present invention (Figures 11 through 18), the cab 10, in addition to rotating relative to the frame 4, is also movable vertically relative thereto, from a lower position to a raised upper position.

In particular the cab 10 is mounted in sliding fashion along a vertical column 27 superiorly integral with the fifth wheel 17.

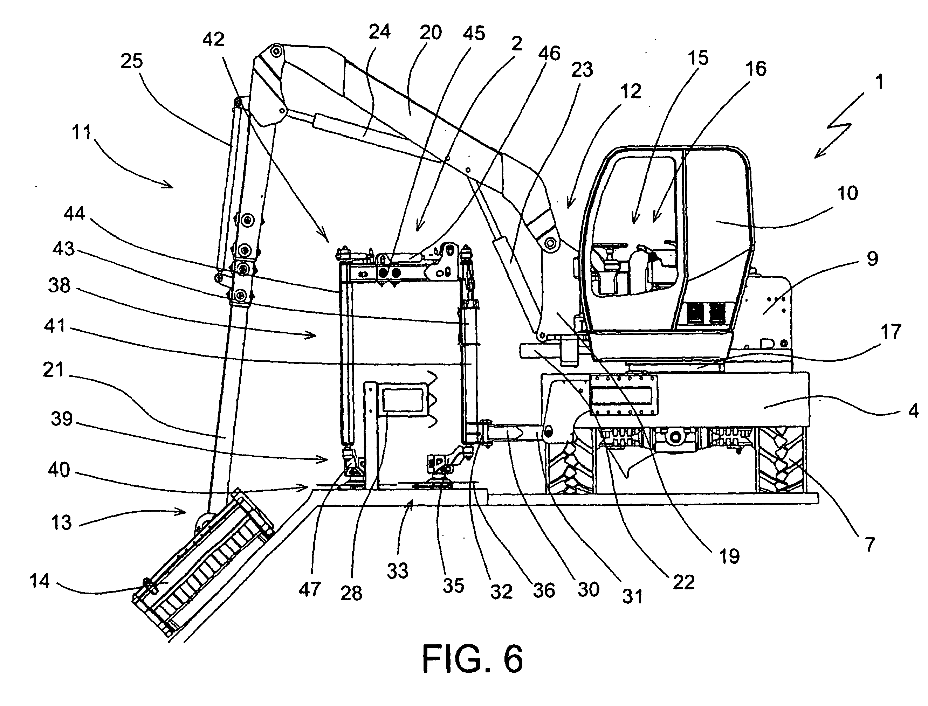

Both in the intermediate embodiment and in the most complete one, the bush cutter vehicle 1 is also provided, as previously stated, with at least a first grass cutter tool 2 destined to cut vegetation in proximity to a guard-rail 28, if present (Figures 6, 7, 8, 15 and 16).

The grass cutter tool 2 which in the intermediate embodiment is mounted anteriorly to the frame 4 and in the most complete embodiment is mounted in correspondence with an intermediate area 29 thereof, comprises a support arm 30 having a first end 31 associated with the frame 4 and a second end 32, and a first rotating grass cutter blade 33 associated to said second end 32.

The support arm 30 is movable relative to the frame 4 from an operative position in which the first blade 33 is positioned substantially horizontal in proximity to the ground laterally relative to the vehicle 1 (Figures 6, 7, 8, 15 and 16), to a transport position in which the grass cutter organ 2 is raised and is substantially contained within the road travelling size of the vehicle 1 (Figures 1-4 and 11-14).

As shown in Figures 2 and 12, in the transport position the first blade 33 is positioned in a substantially vertical plane.

Means 34 for controlling the grass cutter organ 2 are mounted in the cab 10 to allow the operation of the grass cutter organ 2 itself by the operator.

The first blade 33 is connected to the support arm 30 through a first small arm 35 pivotally engaged to the second end 32 of the support arm 30 itself according to an axis of rotation that is vertical when the support arm 30 is in the operative position (Figures 8 and 15).

The grass cutter organ 2 is also provided with a first safety blade guard 36 positioned above the first blade 33 and with first elastic means 37 operatively connected between the support arm 30 and the first small arm 35 to keep the first blade 33 in position during normal operation and allow its yielding rotation according to a vertical axis of rotation, relative to the support arm 30, when the first blade guard 36 impacts against an obstacle during the advancement of the vehicle 1 (such as a support post of the guard-rail 28).

Advantageously, the grass cutter organ 2 is destined to cut the grass present in proximity to the guard-rail 28 on both sides thereof. For this reason, the grass cutter organ 2 further comprises a support structure 38 associated with the support arm 30, which bears at its external end 39 a second grass cutter blade 40.

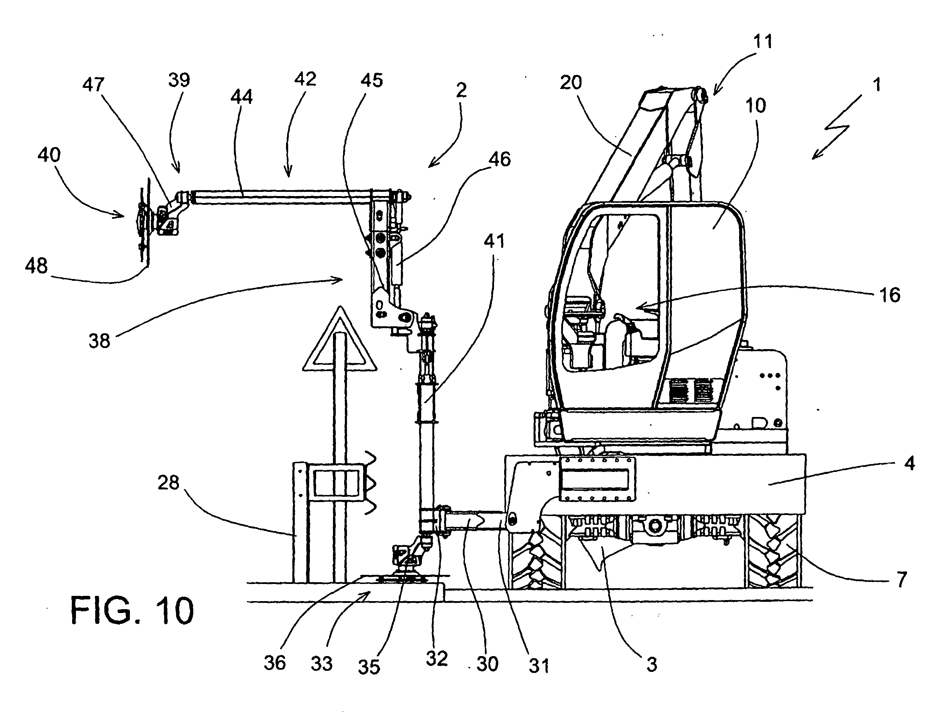

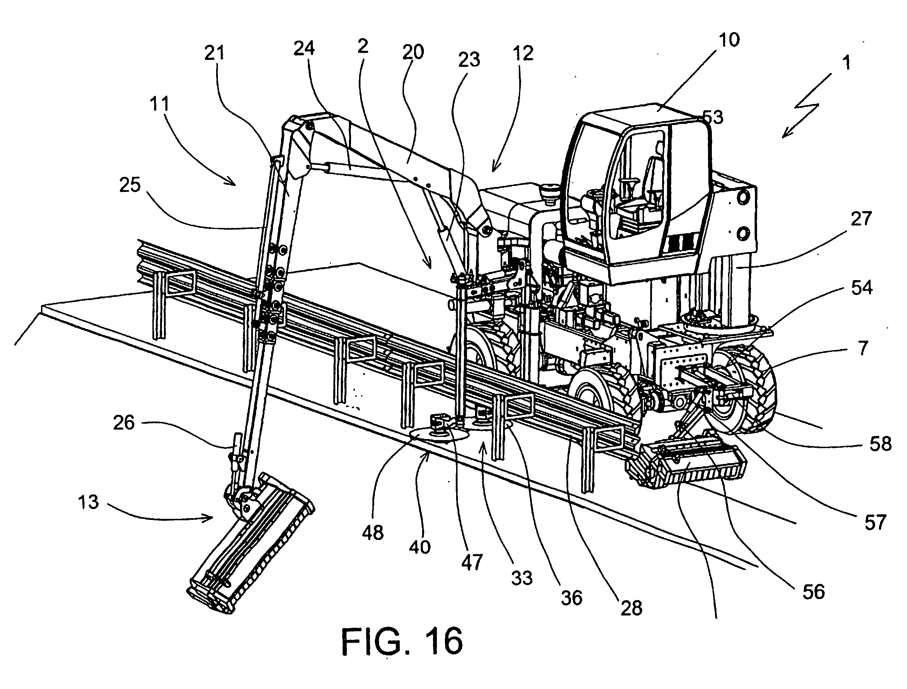

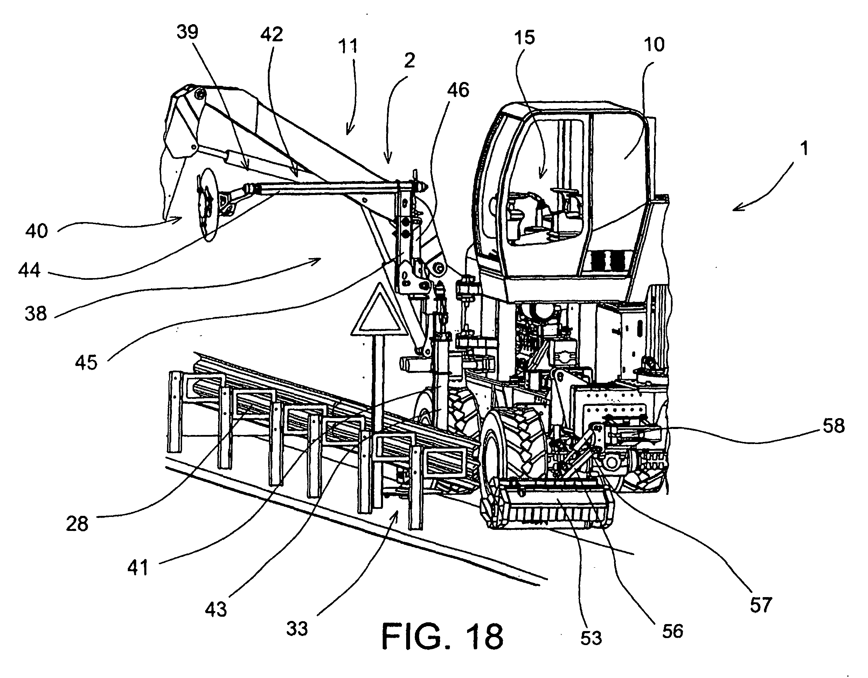

In the illustrated embodiments, the support structure 38 has a first part 41 integral with the support arm 30, and a second part 42 that is movable relative to the support arm 30, from a working position in which the second blade 40 is positioned substantially coplanar to the first blade 33 (Figures 6 and 16), to a leapfrogging position in which the second blade 40 is raised relative to the first blade 33, if the latter is in the operative position (Figures 10 and 18).

Advantageously, the support structure 38 has inverted "U" shape (with reference to when the first and the second blade 33, 40 are respectively in the operative and in the working position) to be able simultaneously to operate at both sides of the guard-rail 28 or of other obstacles, and has an inner upright 43 integral with the support arm 30, an outer upright 44 bearing the second blade 40, and an upright cross member 45 integral with the outer upright 44 and pivotally engaged to the inner upright 43. An upsetting cylinder 46 allows the movement of the cross member 45 and of the outer upright 44 relative to the inner upright 43 from the working position to the leapfrogging position.

Depending on requirements, the rotation of the cross member 45 relative to the inner upright 43 may be 90° or 180°.

The second blade 40 is also pivotally engaged to said support structure 38 according to a vertical axis of rotation (with reference to when the support arm 30 is in the operative position and the support structure 38 is in the working position) by means of a second small arm 47, and it is covered superiorly by a second blade safety guard 48 (Figures 8 and 15).

Second elastic means 49 are operatively connected between the support structure 38 and the upper cross member 45 to maintain the second blade 40 in position and adjacent to the first blade 33 during normal operation and to allow a yielding rotation of the second blade 40 relative to the support structure 38 when the second blade guard 48 impacts against an obstacle during the advancement of the vehicle 1.

In the illustrated embodiments, both the first and the second blade 33, 40 are constituted by three cutting elements 50 pivotally engaged in idle fashion to a rotating central body 51 (Figures 1 and 11).

Additionally, in the most complete embodiment, the bush cutter vehicle 1 comprises a secondary articulated arm 52 mounted anteriorly to the frame 4 that supports a secondary bush cutter tool 53 able to be operatively activated anteriorly to the vehicle 1. The secondary arm can also be operated by the operator located in the cab 10.

As Figures 15 and 16 show, the secondary articulated arm 52 illustrated herein has a complex conformation, and it is constituted by an articulated parallelogram 54 positioned horizontally with a side integral with the frame 4, which is actuated by a lateral translation jack 55.

To a front corner of the articulated parallelogram 54 is pivotally engaged, according to a horizontal main axis of rotation, a support limb 56 of the secondary bush cutter tool 53. The support limb 56, in turn, is actuated by a vertical translation cylinder 57.

Advantageously, the support limb 56 is also pivotally engaged to the articulated parallelogram 54 according to a vertical axis of rotation to allow the rearward motion of the secondary bush cutter tool 53 in case of impacts against obstacles. To control the rotation of the support limb 56, a backing jack 58 is provided.

Additionally, the secondary bush cutter tool 53 is also pivotally engaged to the support limb 56 and it can be actuated by means of a positioning jack 59.

Depending on the application, the bush cutter vehicle 1 can also be provided with at least a blower 3 oriented towards the ground and mounted posteriorly to the frame 4, in order to blow laterally to the vehicle 1, and hence outside the roadway, the cutting residues left on the ground during the cutting operation.

An additional characteristic, always present, of the vehicle 1 of the present invention, is to combine the ability to work on roadsides, and hence on the ground located at a side thereof, and the possibility of circulating freely on the roads, without the different devices with which it is equipped projecting outside the lateral road travelling size of the vehicle 1 itself.

For this purpose the main arm 11 is movable from a first position in which it projects laterally relative to the vehicle 1, to at least a second position in which it is contained within the lateral road travelling size of the vehicle 1. Advantageously, moreover, the main arm 11 can be rotated relative to the frame 4 by at least 180°, from a front position to a rear position.

In the simplest embodiment illustrated in Figure 19, and in the intermediate one illustrated in Figures 1 through 10, the cab 10 is connected to the frame 4 in correspondence with its frontal and central area, whilst the main arm 11 is pivotally engaged to the frame 4 posteriorly and in proximity with the side whereon it is to operate.

In other embodiments, the main arm 11, when it is in the second position, is contained within the lateral size of the vehicle 1 (Figures 3 and 19) but it projects posteriorly.

In the most complete embodiment (illustrated with reference to a vehicle 1 preferably destined to countries where vehicular traffic travels on the right side of the road; in countries where the left side of the road is used, the vehicle 1 could be built in specular fashion) the main arm 11 is located substantially in the same position, whilst the cab 10 is connected to the frame 4 in correspondence with its front left area so that when the main arm 11 is in the second position, the primary bush cutter tool 14 is located side by side to the right side of the cab 10 (Figures 11-14).

In regard to the grass cutter organ 2, it is mounted in correspondence with an intermediate portion of the frame 4 so that it can be operated on the right side thereof.

Similarly, the secondary articulated arm 52 also develops towards the right side of the vehicle 1.

In the road travelling condition, as shown in Figures 11 through 14, the secondary articulated arm 52 is recessed and to the rear towards the frame 4, whilst the grass cutter organ 2 is above the frame 4 itself.

In any embodiment, two road versions are provided: one in which only the front wheels 7 are steered, and another one in which the rear wheels 8 are steered as well.

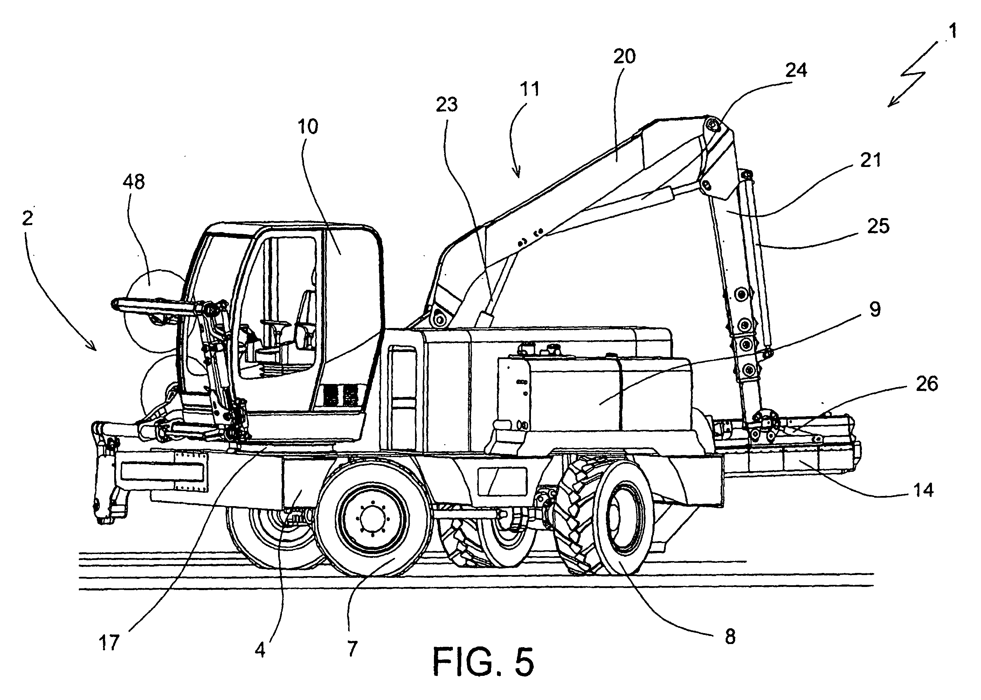

In this second case the vehicle 1 can be operated in crab-like fashion, steering the front wheels 7 and rear wheels 8 in the same direction, or in round fashion, steering the front wheels 7 and rear wheels 8 in opposite directions (Figures 5 e 17), or in traditional fashion, steering only the front wheels 7.

The selection of the steering mode is accomplished by means of an appropriate selector (not shown herein), able to be operated by the operator, which can be programmed in such a way as to assure safe road travel, inhibiting the steering of the rear wheel 8 above a certain speed of advance of the vehicle. The round or crab-like steering modes can thus be activated only when working.

Although they are not illustrated in the accompanying figures, appropriate devices able to maintain each cutting device always grazing the ground can also be provided.

Figures 15 and 16 show a vehicle in accordance with the most complete embodiment of the present invention in operating condition.

The first innovative aspect of the present invention resides in the fact that the cab 10 can be rotated towards the work area whilst allowing the advance of the vehicle 1. Normally, roadside maintenance operations are carried out at very slow speeds of advance so that the vehicle can be driven safely even when the cab 10 is rotated laterally.

Alternatively, in any case, the operator can operate the different devices even when the cab 10 is in the frontal position.

As is shown, the secondary articulated arm 52 is tasked with cutting the grass present on the roadside between the edge of the road and the guard-rail 28, whilst the grass cutter organ 2 cuts the grass in correspondence with the guard-rail 28. The main articulated arm 11 instead operates on the grass present beyond the guard-rail 28.

If the secondary bush cutter tool 53 encounters an obstacle, which the operator fails to notice, it can rotate relative to the articulated parallelogram 54, thanks to the action of the backing jack 58, avoiding damages.

Similarly, if the first and the second blade 33, 40 encounter an obstacle (such as a support post of the guard-rail 28) they can rotate respective towards the vehicle 1 or towards the exterior of the roadside.

When the vehicle 1 encounters higher obstacles, such as road signs, which cannot pass underneath the U defined by the support structure 38, the operator commands the rotation of the second blade 40 to the leapfrogging position (Figures 10 e 18).

The present invention achieves important advantages.

In the first place, the vehicle 1 of the present invention allows to perform, with a single machine and a single operator, the same operations that are currently performed by a plurality of tractors each controlled by an operator, with a noticeable decrease in operating and maintenance costs.

In the second place, the vehicle 1 of the present invention solves the ergonomic posture problems linked to currently used tractors, allowing the operator to be always oriented towards the cutting devices.

The invention thus conceived can be subject to numerous modifications and variations, without thereby departing from the scope of the inventive concept that characterises it.

All components can be replaced by other technically equivalent elements and in practice all materials used, as well as the shapes and dimensions of the various components, can be any depending on requirements.

## Claims

1. Motorised forest bush cutter vehicle (1) having a lateral size suitable for road travel, and comprising
a frame (4) superiorly defining a support area (5) and extending according to a first longitudinal direction of development and according to a second transverse direction of development;
means of advancement (6) mounted on the frame (4) to allow the vehicle (1) to move on the ground;
an engine (9) mounted on the frame (4) and operatively connected at least to said means of advancement (6),
a control cab (10) for housing an operator;
driving means (15) mounted in said cab (10) and operatively active on said means of advancement (6) and on said engine (9) to allow the operator to drive the vehicle (1);
at least a main articulated arm (11) able to be operated laterally to the vehicle (1) and having a first end (12) pivotally engaged to the support area (5) of the vehicle (1), and a second end (13) provided with at least a motorised primary bush cutter tool (14), and
means (16) for controlling said main arm (11) mounted in said cab (10) and operatively active on said main arm (11) and said primary bush cutter tool (14),
said control cab (10) being connected in rotary fashion to the vehicle (1) and being able to rotate about a substantially vertical axis of rotation at least from a first frontal position in which it is oriented according to the longitudinal direction of development, to at least a second lateral position in which it is oriented according to the transverse direction of development,
and at least said driving means (15) being able to allow the vehicle (1) to be driven both when said cab (10) is in the first position, and when it is in the second position **characterised in that** said control cab (10) can rotate with respect to the frame (4) and the engine (9).

2. Bush cutter vehicle as claimed in claim 1 **characterised in that** said cab (10) is also movable vertically relative to said frame (4) from a lower position to a raised upper position.

3. Bush cutter vehicle as claimed in any of the previous claims **characterised in that** said articulated main arm (11) has at least a telescopic segment (21), and **in that** said primary bush cutter tool (14) is articulated relative to the second end (13) of the main articulated arm (11).

4. Bush cutter vehicle as claimed in any of the previous claims **characterised in that** it further comprises at least a first grass cutter organ (2) comprising a support arm (30) having a first end (31) associated to the frame (4) and a second end (32), and a first rotating grass cutting blade (33) associated to said second end (32), said support arm (30) being movable relative to the frame (4) from an operative position in which said first blade (33) is positioned substantially horizontal in proximity to the ground laterally relative to the vehicle (1), and a transport position in which said grass cutter organ (2) is raised and substantially contained within the road travelling size.

5. Bush cutter vehicle as claimed in claim 4 **characterised in that** said first blade (33) is pivotally engaged to said second end (32) of the support arm (30) according to an axis of rotation that is vertical when the support arm (30) is in said operative position, and **in that** said grass cutting organ (2) further comprises a first safety blade guard (36) located above said first blade (33) and first elastic means (37) operatively connected between said support arm (30) and said first blade (33) to keep said first blade (33) in position during normal operation and to allow a yielding rotation of the first blade (33) relative to the support arm (30) when said first blade guard (36) impacts against an obstacle when the vehicle (1) advances.

6. Bush cutter vehicle as claimed in claim 4 or 5 **characterised in that** said grass cutter organ (2) further comprises a support structure (38) associated to said support arm (30) and a second grass cutter blade (40) mounted on said support structure (38), said support structure (38) being at least in part movable relative to said support arm (30), from a working position in which said second blade (40) is positioned substantially coplanar relative to said first blade (33), to a leapfrogging position in which said second blade (40) is raised relative to the first blade (33), when the latter is in the operative position.

7. Bush cutter vehicle as claimed in claim 6 **characterised in that** said support structure (38) has an inverted U shape when the first and the second blade (33, 40) are respectively in the operative position and in the working position, to allow the simultaneous operation of the first and of the second blade (33, 40) even in the presence of obstacles interposed between them.

8. Bush cutter vehicle as claimed in claim 6 or 7 **characterised in that** said second blade (40) is pivotally engaged to said support structure (38) according to an axis of rotation that is vertical when the support arm (30) is in said operative position and said support structure (38) is in the working position, and **in that** said grass cutter organ (2) further comprises a second safety blade guard (48) positioned above said second blade (40) and second elastic means (49) operatively connected between the support structure (38) and the second blade (40) to keep the second blade (40) in position and adjacent to the first blade (33) during normal operation and to allow a yielding rotation of the second blade (40) relative to the support structure (38) when said second blade guard (48) impacts against an obstacle when the vehicle (1) advances.

9. Bush cutter vehicle as claimed in any of the previous claims **characterised in that** it further comprises a secondary articulated arm (52) mounted anteriorly to said frame (4) and bearing a secondary bush cutter tool (53) able to be operatively activated anteriorly to the frame (4), said secondary arm (52) being able to be operated by the operator located in said cab (10).

10. Bush cutter vehicle as claimed in any of the previous claims **characterised in that** it further comprises at least a blower (3) oriented towards the ground and mounted posteriorly to the frame (4) to blow laterally to the vehicle (1) any cutting residues present on the ground.

11. Bush cutter vehicle as claimed in any of the previous claims **characterised in that** said main arm (11) is movable from a first position in which it projects laterally relative to the vehicle (1), and at least a second position in which it is contained within the lateral road travelling size of the vehicle (1).

12. Bush cutter vehicle as claimed in claim 11 **characterised in that** said main arm (11) is able to rotate relative to the frame (4) at least by about 180°, from a frontal position to a rear position.

13. Bush cutter vehicle as claimed in claim 11 or 12 **characterised in that** said cab (10) and said main arm (11) are mounted on said frame (4) respectively in correspondence with its lateral front area and with its rear area, and **in that** when said main arm (11) is in said second position said primary bush cutter tool (14) is located side by side to said cab (10).

14. Bush cutter vehicle as claimed in any of the previous claims **characterised in that** said means of advancement (6) comprise at least two front wheels (7) and two rear wheels (8).

15. Bush cutter vehicle as claimed in claim 14 **characterised in that** both said front wheels (7) and said rear wheels (8) can be steered by the operator in the cab (10), either in the same direction or in opposite directions.

## Patentansprüche

1. Angetriebenes Buschmähfahrzeug (1) mit einer seitlichen Abmessung, die für den Strassenverkehr geeignet ist, enthaltend
einen Rahmen (4), der einen Trägerbereich (5) beschreibt und sich in einer ersten Richtung der Längenausdehnung und einer zweiten Richtung der Querausdehnung erstreckt;
an dem Rahmen (4) montierte Verfahrmittel (6), die es dem Fahrzeug (1) erlauben, sich auf dem Boden zu bewegen;
einen Motor (9), der an dem Rahmen (4) montiert und betriebsmässig mit wenigstens den genannten Verfahrmitteln (6) verbunden ist;
eine Steuerkabine (10) für einen Bedienenden;
Steuermittel (15), die in der genannten Kabine (10) montiert und betriebsmässig auf die genannten Verfahrmittel (6) und auf den genannten Motor (9) wirken, um es dem Bediener zu erlauben, das Fahrzeug (1) zu führen;
wenigstens einen Hauptgelenkarm (11), geeignet, seitlich des Fahrzeugs (1) betätigt zu werden, versehen mit einem ersten Ende (12), das drehbar an dem Trägerbereich (5) des Fahrzeugs (1) befestigt ist, und einem zweiten Ende (13), das wenigstens mit einem angetriebenen primären Buschschneidewerkzeug (14) ausgestattet ist; und
Mittel (16) zum Steuern des genannten Hauptarmes (11), montiert in der genannten Kabine (10) und betriebsmässig auf den genannten Hauptarm (11) und das genannte primäre Buschschneidewerkzeug (14) wirkend, wobei die genannte Steuerkabine (10) auf drehbare Weise an dem Fahrzeug (1) befestigt und in der Lage ist, sich um eine im wesentlichen vertikale Drehachse zu drehen, und zwar wenigstens aus einer ersten frontalen Position, in welcher sie in der Richtung der Längenausdehnung ausgerichtet ist, in wenigstens eine zweite seitliche Position, in welcher sie in der Richtung der Querausdehnung ausgerichtet ist, und wobei wenigstens die genannten Steuermittel (15) es dem Fahrzeug (1) erlauben geführt zu werden, sei es, wenn sich die Kabine (10) in der ersten Position befindet, wie auch, wenn sie sich in der zweiten Position befindet, **dadurch gekennzeichnet, dass** sich die genannte Steuerkabine (10) im Verhältnis zu dem Rahmen (4) und dem Motor (9) drehen kann.

2. Buschmähfahrzeug nach Patentanspruch 1, **dadurch gekennzeichnet, dass** die genannte Kabine (10) im Verhältnis zu dem genannten Rahmen (4) ebenfalls vertikal aus einer unteren Position in eine angehobene Position beweglich ist.

3. Buschmähfahrzeug nach einem beliebigen der vorstehenden Patentansprüche, **dadurch gekennzeichnet, dass** der genannte Hauptgelenkarm (11) wenigstens ein Teleskopsegment (21) aufweist, und **dadurch**, dass das genannte primäre Buschschneidewerkzeug (14) im Verhältnis zu dem zweiten Ende (13) des Hauptgelenkarmes (11) gelenkig ist.

4. Buschmähfahrzeug nach einem beliebigen der vorstehenden Patentansprüche, **dadurch gekennzeichnet, dass** es ausserdem wenigstens ein erstes Grasmähteil (2) enthält, enthaltend einen Trägerarm (30) mit einem ersten Ende (31), das dem Rahmen (4) zugeordnet ist, und mit einem zweiten Ende (32), sowie ein erstes rotierendes Grasmähmesser (33), zugeordnet dem genannten zweiten Ende (32), wobei der genannte Trägerarm (30) im Verhältnis zu dem Rahmen (4) beweglich ist aus einer Betriebsposition, in welcher das genannte erste Messer (33) im wesentlichen horizontal in der Nähe des Bodens und seitlich im Verhältnis zu dem Fahrzeug (1) positioniert ist, in eine Transportposition, in welcher das genannte Grasmähteil (2) angehoben und im wesentlichen innerhalb der Abmessung des Strassenfahrzeugs enthalten ist.

5. Buschmähfahrzeug nach Patentanspruch 4, **dadurch gekennzeichnet, dass** das genannte erste Messer (33) drehbar an dem genannten zweiten Ende (32) des Trägerarms (30) befestigt ist, und zwar übereinstimmend mit einer Drehachse, die vertikal verläuft, wenn sich der Trägerarm (30) in der genannten Betriebsposition befindet, und **dadurch**, dass das genannte Grasmähteil (2) ausserdem einen ersten Messerschutz (36) enthält, angeordnet über dem genannten ersten Messer (33), sowie erste elastische Mittel (37), die betriebsmässig zwischen dem genannten Trägerarm (30) und dem genannten ersten Messer (33) befestigt sind, um das genannte erste Messer (33) während des normalen Betriebes in Position zu halten und eine nachgebende Umdrehung des ersten Messers (33) im Verhältnis zu dem Trägerarm (30) zu erlauben, wenn der genannte erste Messerschutz (36) beim Verfahren des Fahrzeugs (1) auf ein Hindernis trifft.

6. Buschmähfahrzeug nach Patentanspruch 4 oder 5, **dadurch gekennzeichnet, dass** das genannte Grasmähteil (2) ausserdem eine Trägerstruktur (38) enthält, zugeordnet dem genannten Trägerarm (30), sowie ein zweites, an der genannten Trägerstruktur (38) montiertes Grasmähmesser (40), wobei die genannte Trägerstruktur (38) wenigstens teilweise im Verhältnis zu dem genannten Trägerarm (30) beweglich ist, und zwar aus einer Arbeitsposition, in welcher das genannte zweite Grasmähmesser (40) im wesentlichen koplanar zu dem genannten ersten Messer (33) angeordnet ist, in eine überlagernde Position, in welcher das zweite Messer (40) im Verhältnis zu dem ersten Messer (33) angehoben ist, wenn letzteres sich in der Betriebsposition befindet.

7. Buschmähfahrzeug nach Patentanspruch 6, **dadurch gekennzeichnet, dass** die genannte Trägerstruktur (38) die Form eines umgekehrten "U" hat, wenn sich das erste und das zweite Messer (33, 40) jeweils in der Betriebsposition und in der Arbeitsposition befinden, um das gleichzeitige Arbeiten des ersten und des zweiten Messers (33, 40) zu ermöglichen, auch in Gegenwart von zwischen diesen vorhandenen Hindernissen.

8. Buschmähfahrzeug nach Patentanspruch 6 oder 7, **dadurch gekennzeichnet, dass** das genannte zweite Messer (40) drehbar an der genannten Trägerstruktur (38) befestigt ist, und zwar übereinstimmend mit einer Drehachse, die vertikal ist, wenn sich der Trägerarm in der genannten Betriebsposition und die genannte Trägerstruktur (38) in der Arbeitsposition befinden, und **dadurch**, dass das genannte Grasmähteil (2) ausserdem einen zweiten Messerschutz (48) enthält, positioniert über dem genannten zweiten Messer (40), sowie zweite elastische Mittel (49), die betriebsmässig zwischen der Trägerstruktur (38) und dem zweiten Messer (40) befestigt sind, um das zweite Messer (40) während des normalen Betriebes in Position und angrenzend an das erste Messer (33) zu halten und eine nachgebende Umdrehung des zweiten Messers (40) im Verhältnis zu der Trägerstruktur (38) zu erlauben, wenn der genannte Messerschutz (48) beim Verfahren des Fahrzeugs (1) auf ein Hindernis trifft.

9. Buschmähfahrzeug nach einem beliebigen der vorstehenden Patentansprüche, **dadurch gekennzeichnet, dass** es ausserdem einen sekundären Gelenkarm (52) enthält, montiert vom an dem Rahmen (4) und ein sekundäres Buschschneidewerkzeug (53) tragend, in der Lage, betriebsmässig vom an dem Rahmen (4) aktiviert zu werden, wobei der genannte sekundäre Arm (52) durch den sich in der Kabine (10) befindlichen Bediener betätigt werden kann.

10. Buschmähfahrzeug nach einem beliebigen der vorstehenden Patentansprüche, **dadurch gekennzeichnet, dass** es ausserdem wenigstens ein Gebläse (3) enthält, das zum Boden hin gerichtet und hinten an dem Rahmen (4) montiert ist, um alle auf dem Boden liegenden Schneidabfälle nach seitlich des Fahrzeugs (1) zu blasen.

11. Buschmähfahrzeug nach einem beliebigen der vorstehenden Patentansprüche, **dadurch gekennzeichnet, dass** der genannte Hauptarm (11) beweglich ist aus einer ersten Position, in welcher er seitlich im Verhältnis zu dem Fahrzeug (1) übersteht, in wenigstens eine zweite Position, in welcher er innerhalb der seitlichen Abmessung des Fahrzeugs (1) für den Strassenverkehr enthalten ist.

12. Buschmähfahrzeug nach Patentanspruch 11, **dadurch gekennzeichnet, dass** der genannte Hauptarm (11) in der Lage ist, sich im Verhältnis zu dem Rahmen (4) um wenigstens 180° aus einer frontalen Position in eine hintere Position zu drehen.

13. Buschmähfahrzeug nach Patentanspruch 11 oder 12, **dadurch gekennzeichnet, dass** die genannte Kabine (10) und der genannte Hauptarm (11) an dem genannten Rahmen (4) jeweils in dessen seitlichem Vorderbereich und dem rückwärtigen Bereich montiert sind, und **dadurch**, dass, wenn sich der genannte Hauptarm (11) in der genannten zweiten Position befindet, das genannte primäre Buschschneidewerkzeug (14) Seite an Seite mit der Kabine (10) angeordnet ist.

14. Buschmähfahrzeug nach einem beliebigen der vorstehenden Patentansprüche, **dadurch gekennzeichnet, dass** die genannten Verfahrmittel (6) wenigstens zwei Vorderräder (7) und zwei Hinterräder (8) enthalten.

15. Buschmähfahrzeug nach Patentanspruch 14, **dadurch gekennzeichnet, dass** die genannten Vorderräder (7) wie auch die genannten Hinterräder (8) durch den Bediener in der Kabine (10) gelenkt werden können, entweder in der einen Richtung oder in der entgegengesetzten Richtung.

## Revendications

1. Véhicule motorisé de débroussaillage (1) ayant une taille latérale appropriée pour le transport sur route, et comprenant
un châssis (4) définissant supérieurement une zone de support (5) et se prolongeant selon une première direction longitudinale de développement et selon une seconde direction transversale de développement;
des moyens d'avance (6) montés sur le châssis (4) pour permettre au véhicule (1) de se déplacer sur le sol;
un moteur (9) monté sur le châssis (4) et relié opérationnellement au moins auxdits moyens d'avance (6),
une cabine de conduite (10) pouvant recevoir un opérateur;
des moyens de conduite (15) montés dans ladite cabine (10) et actifs opérationnellement sur lesdits moyens d'avance (6) et sur ledit moteur (9) pour permettre à l'opérateur de conduire le véhicule (1);
au moins un bras articulé (11) pouvant être actionné latéralement au véhicule (1) et ayant une première extrémité (12) engagée de façon pivotante dans la zone de support (5) du véhicule (1) et une seconde extrémité (13) dotée d'au moins un outil débroussailleur primaire motorisé (14), et
des moyens (16) de commande dudit bras principal (11) montés dans ladite cabine (10) et actifs opérationnellement sur ledit bras principal (11) et ledit outil débroussailleur primaire (14),
ladite cabine de conduite (10) étant reliée de façon rotative au véhicule (1) et étant capable de tourner sur un axe de rotation substantiellement vertical au moins d'une première position frontale dans laquelle elle est orientée selon la direction longitudinale de développement, à au moins une seconde position latérale dans laquelle elle est orientée selon la direction transversale de développement,
et lesdits moyens de conduite (15) étant au moins capable de permettre au véhicule (1) d'être conduit quand ladite cabine (10) est dans la première position, et quand elle est dans la deuxième position, **caractérisé en ce que** ladite cabine de commande (10) peut tourner par rapport au châssis (4) et au moteur (9).

2. Véhicule de débroussaillage tel que revendiqué dans la revendication 1, **caractérisé en ce que** ladite cabine (10) est également mobile verticalement par rapport audit châssis (4) d'une position inférieure à une position supérieure soulevée.

3. Véhicule de débroussaillage tel que revendiqué dans l'une quelconque des revendications précédentes, **caractérisé en ce que** ledit bras principal articulé (11) a au moins un segment télescopique (21), et **en ce que** ledit outil débroussailleur primaire (14) est articulé par rapport à la seconde extrémité (13) du bras articulé principal (11).

4. Véhicule de débroussaillage tel que revendiqué dans l'une quelconque des revendications précédentes, **caractérisé en ce qu'**il comprend également au moins un premier organe pour la tonte de l'herbe (2) comprenant un bras de support (30) ayant une première extrémité (31) associée au châssis (4) et une seconde extrémité (32), et une première lame rotative pour la tonte de l'herbe (33) associée à ladite seconde extrémité (32), ledit bras de support (30) étant mobile par rapport au châssis (4) entre une position opérationnelle dans laquelle ladite première lame (33) est positionnée de façon substantiellement horizontale à proximité du sol latéralement par rapport au véhicule (1), et une position de transport dans laquelle ledit organe de tonte de l'herbe (2) est soulevé et substantiellement contenu à l'intérieur de la taille de transport sur toute.

5. Véhicule de débroussaillage tel que revendiqué dans la revendication 4, **caractérisé en ce que** ladite première lame (33) est engagée de façon pivotante dans ladite seconde extrémité (32) du bras de support (30), selon un axe de rotation qui est vertical quand le bras de support (30) est dans ladite position opérationnelle, et **en ce que** ledit organe de tonte d'herbe (2) comprend également une première protection lame de sécurité (36) située au-dessus de ladite première lame (33) et de premiers moyens élastiques (37) opérationnellement reliés entre ledit bras de support (30) et ladite première lame (33) pour maintenir ladite première lame (33) en position pendant le fonctionnement normal et pour permettre une rotation élastique de la première lame (33) par rapport au bras de support (30) quand ladite première protection lame (36) heurte contre un obstacle quand le véhicule (1) avance.

6. Véhicule de débroussaillage tel que revendiqué dans la revendication 4 ou 5 **caractérisé en ce que** l'organe de tonte de l'herbe (2) comprend également une structure de support (38) associée audit bras de support (30) et une seconde lame de tonte de l'herbe (40) montée sur ladite structure de support (38), ladite structure de support (38) étant au moins en partie mobile par rapport audit bras de support (30), d'une position de travail dans laquelle ladite seconde lame (40) est positionnée de façon substantiellement coplanaire par rapport à ladite première lame (33), à une position avancée dans laquelle ladite seconde lame (40) est soulevée par rapport à la première lame (33), quand celle-ci est dans la position opérationnelle.

7. Véhicule de débroussaillage tel que revendiqué dans la revendication 6, **caractérisé en ce que** ladite structure de support (38) a une forme en U inversé quand les première et seconde lames (33, 40) sont respectivement dans la position opérationnelle et la position de fonctionnement, pour permettre le fonctionnement simultané de la première et de la seconde lame (33, 40) même en présence d'obstacles interposés entre elles.

8. Véhicule de débroussaillage tel que revendiqué dans la revendication 6 ou 7, **caractérisé en ce que** ladite seconde lame (40) est engagée de façon pivotante dans ladite structure de support (38) selon un axe de rotation qui est vertical quand le bras de support (30) est dans ladite position opérationnelle et ladite structure de support (38) est dans la position de fonctionnement, et **en ce que** ledit organe de tonte d'herbe (2) comprend également une seconde protection lame de sécurité (48) positionnée au-dessus de ladite seconde lame (40) et un second moyen élastique (49) relié opérationnellement entre la structure de support (38) et la seconde lame (40) pour maintenir la seconde lame (40) en position et adjacente à la première lame (33) pendant le fonctionnement normal et pour permettre une rotation élastique de la seconde lame (40) par rapport à la structure de support (38) quand ladite seconde protection lame (48) heurte contre un obstacle quand le véhicule (1) avance.

9. Véhicule de débroussaillage tel que revendiqué dans l'une quelconque des revendications précédentes, **caractérisé en ce qu'**il comprend également un bras articulé secondaire (52) monté à l'avant dudit châssis (4) et portant un second organe débroussailleur (53) pouvant être actionné opérationnellement à l'avant du châssis (4), ledit bras secondaire (52) pouvant être actionné par l'opérateur situé dans ladite cabine (10);

10. Véhicule de débroussaillage tel que revendiqué dans l'une quelconque des revendications précédentes, **caractérisé en ce qu'**il comprend également au moins un souffleur (3) orienté vers le sol et monté à l'arrière du châssis (4) pour souffler latéralement au véhicule (1) tous les résidus de coupe présents sur le sol.

11. Véhicule de débroussaillage tel que revendiqué dans l'une quelconque des revendications précédentes, **caractérisé en ce que** ledit bras principal (11) est mobile d'une première position dans laquelle il se projette latéralement par rapport au véhicule (1), et au moins une seconde position dans laquelle il est contenu dans la taille de transport sur toute latérale du véhicule (1).

12. Véhicule de débroussaillage tel que revendiqué dans la revendication 11, **caractérisé en ce que** ledit bras principal (11) est capable de tourner par rapport au châssis (4) au moins d'environ 180°, d'une position frontale à une position arrière;

13. Véhicule de débroussaillage tel que revendiqué dans les revendications 11 ou 12, **caractérisé en ce que** ladite cabine (10) et ledit bras principal (11) sont montés sur ledit châssis (4) respectivement au niveau de sa zone avant latérale et de sa zone arrière, et **en ce que** quand ledit bras principal (11) est dans ladite seconde position, ledit organe débroussailleur primaire (14) est situé à côté de ladite cabine (10).

14. Véhicule de débroussaillage tel que revendiqué dans l'une quelconque des revendications précédentes, **caractérisé en ce que** lesdits moyens d'avance (6) comprennent au moins deux roues avant (7) et deux roues arrière (8).

15. Véhicule de débroussaillage tel que revendiqué dans la revendication 14, **caractérisé en ce que** lesdites roues avant (7) et lesdites roues arrière (8) peuvent être braquées par l'opérateur dans la cabine (10), soit dans la même direction soit dans des directions opposées.
